# EUROPEAN PATENT SPECIFICATION

(11) **EP 4 514 569 B1**
(45) Date of publication and mention of the grant of the patent: **04.03.2026**
(21) Application number: 23721781.5
(22) Date of filing: 13.04.2023
(51) Int. Cl.: B25J 9/10, B25J 15/00, B25J 15/02, B25J 15/12

(54) **GRIPPING DEVICE FOR HANDLING PIECES OR COMPONENTS HAVING VARIABLE SHAPES AND SIZES**
GREIFVORRICHTUNG ZUM HANDHABEN VON TEILEN ODER KOMPONENTEN MIT VARIABLEN FORMEN UND GRÖSSEN
DISPOSITIF DE PRÉHENSION PERMETTANT DE MANIPULER DES PIÈCES OU DES COMPOSANTS PRÉSENTANT DES FORMES ET DES TAILLES VARIABLES

(30) Priority: 27.04.2022 IT 202200008327
(43) Date of publication of application: 05.03.2025
(73) Proprietor: C.R.F. Società Consortile per Azioni, 10043 Orbassano (Torino) (IT)
(72) Inventor: ZANELLA, Alessandro, 10043 Orbassano (Torino) (IT); JILICH, Michal, 16145 Genova (IT); PIETRONAVE, Giorgio, 16145 Genova (IT); ZOPPI, Matteo, 16145 Genova (IT)
(74) Representative: Buzzi, Notaro & Antonielli d'Oulx S.p.A.
(86) International application number: PCT/IB2023/053772
(87) International publication number: WO 2023/209478

(56) References cited:
- DE-A1- 102020 207 038
- JP-A- 2019 118 986
- JP-A- 2020 104 185
- JP-A- H06 335 887
- US-A1- 2011 148 132
- US-B2- 8 333 417

## Description

### Field of the invention

The present invention relates to gripping devices, or grippers, of the type that can be used, for example, on a robot for handling pieces or components in an industrial environment.

In particular, the invention regards a gripping device that can be applied, for example, on an industrial assembly line for picking up pieces or components from a container in which the aforesaid pieces or components are stored and for transferring them into a position where they can be used by an operator or by a robot for being mounted along the assembly line.

### Prior art

Known and used for some time now are industrial grippers that have a dedicated configuration, i.e., one designed according to the shapes and sizes of the pieces that the gripper has to grip.

Grippers have also been proposed having a certain degree of operating flexibility, which enables use thereof for handling pieces or components of different shapes and/or different sizes. However, all solutions of this type have proven relatively complex and far from reliable.

In the case of some specific applications (for example, on assembly lines for engine units of motor vehicles) the pieces or components that constitute a specific assembly kit may vary considerably both in shape and in size. There is consequently felt the need for a gripper capable of adapting automatically to these differences, in any case guaranteeing stability of gripping and without requiring the adoption of excessively complex structures, also with reference to the systems for controlling the grippers.

The document EP 3 900 884 A1 filed in the name of the present applicant has proposed a gripper according to the preamble of the annexed claim 1, which is able to overcome in a satisfactory way all the above problems. At the same time, there is still felt the need for further improvement of this solution.

A gripping device according to the preamble of claim 1 is known from JP H06 335887 A. Further solutions are known from JP 2019 118986 A, DE 10 2020 207038 A1, and US 2011/148132 A1.

### Object of the invention

The object of the invention is to provide a gripping device that will present a high operating flexibility, in the sense of capacity to adapt automatically to pieces and components to be gripped having shapes and sizes even markedly different from one another, and that, notwithstanding this, will prove reliable in the operation and will not require a complex control system.

A further object of the invention is to achieve the aforesaid aim by providing a gripper having a structure that is relatively simple and also readily adaptable in such a way as to assume different configurations according to the required application.

### Summary of the invention

With a view to achieving one or more of the aforesaid objects, the subject of the invention is a gripping device that can be used, for example, on a robot, for handling pieces or components of variable shapes and sizes, the above device having the characteristics of claim 1.

In an example of embodiment, the pantograph linkage of each gripping arm is in accordance with claim 2.

According to a further characteristic, the body of the distal portion of each gripping arm is in the form of a gripping finger, having a wedge-shaped configuration, with a base portion connected to said pantograph linkage, an inner surface for engaging a piece to be gripped and an outer surface, where the inner surface and the outer surface converge with one another in the direction of an end tip of the gripping finger, and two lateral surfaces, for example plane and parallel or else converging towards the tip, to facilitate gripping of small objects.

In a preferred example, the body of the gripping finger has a central opening so that the end tip of the body is connected to the base portion of the body by two walls separate from one another, which form an integral part of the body and define, respectively, the inner, gripping, surface and the outer surface of the gripping finger. Preferably, the inner, gripping, surface is a toothed surface, with teeth set in a direction transverse to the longitudinal direction of said surface. In a preferred embodiment, the wall defining the aforesaid inner, gripping, surface is in the form of a cogged-belt portion. In the case of the aforesaid preferred embodiment, the body of the gripping finger has a portion of reduced thickness functioning as a hinge between the outer wall and the base portion, while both the outer wall and the inner wall of the gripping finger have a minimum thickness adjacent to the end tip of the gripping finger so that the end tip is substantially hinged to said outer and inner walls.

In a further example, the inner wall and/or the outer wall of the body of the gripping finger, separated from one another by said central opening, include/includes a metal insert.

In a variant, the body of the aforesaid gripping finger is a full piece consisting of elastomeric material.

### Detailed description of the invention

Further characteristics and advantages of the invention will emerge from the ensuing description with reference to the annexed drawings, which are provided purely by way of non-limiting example and in which:
- Figure 1 is a perspective view of a preferred embodiment of the gripper according to the invention, in the condition of gripping of a component;
- Figure 2 is an exploded perspective view of the gripper of Figure 1;
- Figure 3 is a perspective view of a single gripping arm of the gripper;
- Figure 4 is a side elevation of an example of gripper according to the invention, in the condition of gripping a of component;
- Figure 4A shows a detail of Figure 4 at an enlarged scale;
- Figures 5A, 5B, 5C, and 5D are diagrams in plan view that illustrate different configurations of the gripper according to the invention;
- Figure 6 is a further perspective view of the gripper according to the invention in the condition of gripping a of component of small size; and
- Figures 7A, 7B, and 7C illustrate three different operating conditions of a preferred embodiment of the gripping finger carried by each gripping arm of the gripper according to the invention.

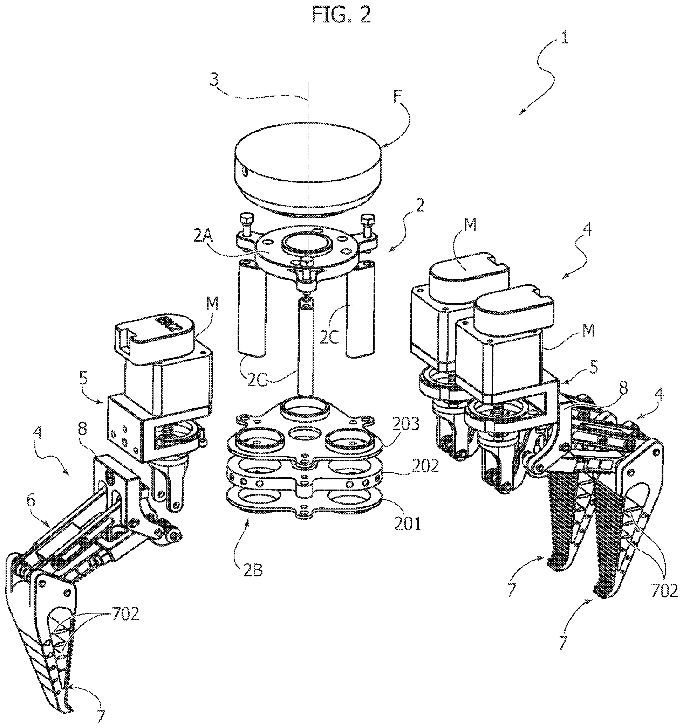

In the drawings, the reference number 1 designates as a whole a gripping device, or gripper, that can be used on a robot for handling pieces or components P that have variable shapes and sizes. The device 1 comprises a main supporting structure 2 (see, in particular, Figure 2), which, in the example illustrated, has a top plate 2A configured for removable connection (for example, by means of screws) to a robot flange F that is to be carried by the wrist of a multi-axis manipulator robot (not shown). The main supporting structure 2 defines a main axis 3 of the device 1.

Once again with reference to the example illustrated in Figure 2, the main supporting structure 2 further comprises a bottom assembly 2B, constituted by three plates rigidly connected together (by means of screws) in a stacked configuration. The bottom assembly 2B is joined (for example, by means of screws) to the top plate 2A by three spacer columns 2C.

Mounted on the main supporting structure 2, about the main axis 3, are three gripping arms 4. As will emerge from the ensuing description, the number of gripping arms illustrated in this example is not to be understood in a limiting way. In general, the gripper according to the invention may be built with two or more gripping arms 4, according to the requirements of the specific application.

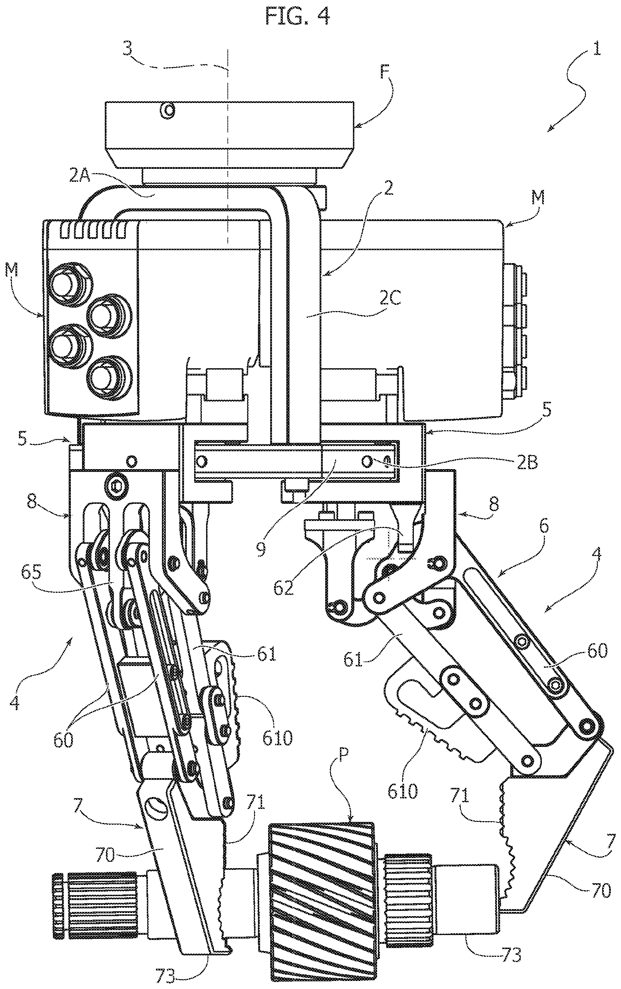

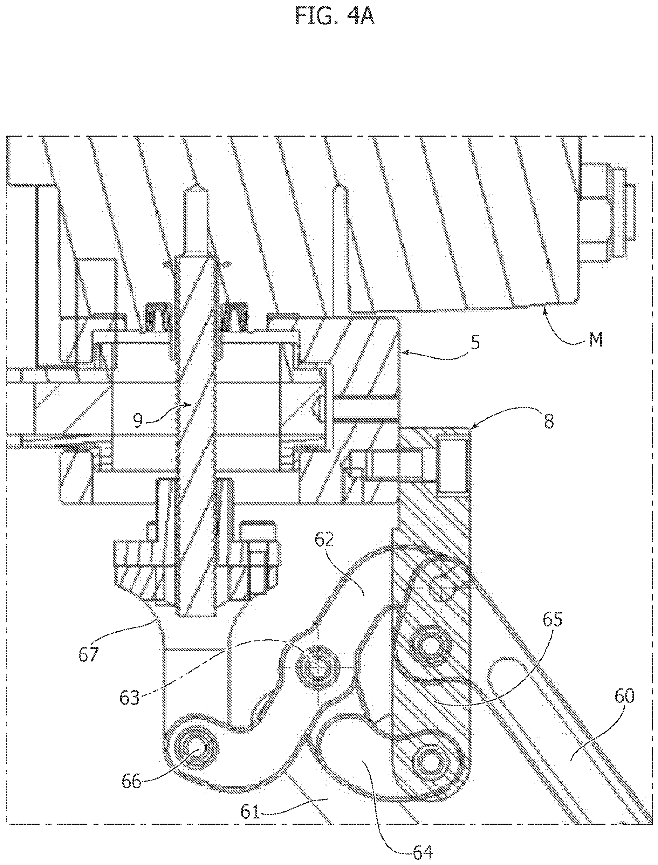

Each gripping arm 4 constitutes a modular unit that can be mounted as a whole on the main supporting structure 2. For this purpose, each gripping arm 4 is provided with a respective arm support 5, which in the example has a general C-shaped configuration and is mounted on the main supporting structure 2 so as to gird the bottom assembly 2B (see, in particular, Figure 4). Each C-shaped support 5 has a top wing, fixed on which is the body of a respective electric motor M for driving the respective gripping arm 4. As may be seen in Figure 4, each motor M is set in the space between the bottom assembly 2B and the top plate 2A of the main supporting structure 2.

Each gripping arm 4 includes a proximal portion, designated as a whole by the reference number 6, and a distal portion 7.

The proximal portion 6 is configured in the form of a pantograph linkage and is carried by a bracket 8 rigidly connected to the respective arm support 5.

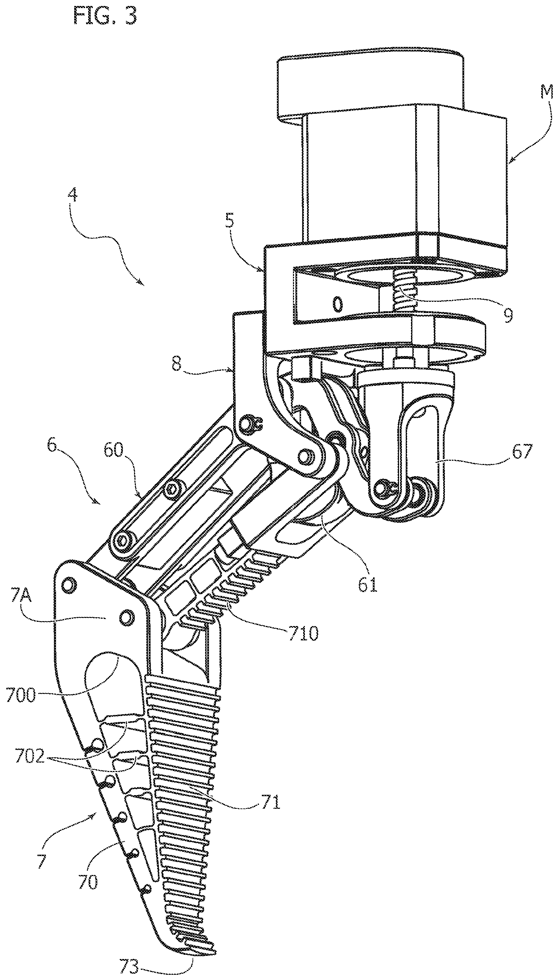

The movement of articulation of the pantograph linkage 6 of each gripping arm 4 is controlled by the respective electric motor M via a screw/nut-screw system. Each motor M is arranged with its axis parallel to the main axis 3 of the device and drives in rotation a nut-screw (not visible in the drawings), engaged within which is a screw 9 (more clearly visible in Figure 3) operatively coupled to the respective pantograph linkage 6, in the way that will be described hereinafter.

In the case of the example illustrated herein, each pantograph linkage 6 comprises an outer parallelogram rod 60 and an inner parallelogram rod 61 (in the present description and in the ensuing claims, the terms "outer" and "inner" are used with reference to the main axis 3 of the device, the inner side of the arm being the one facing said axis).

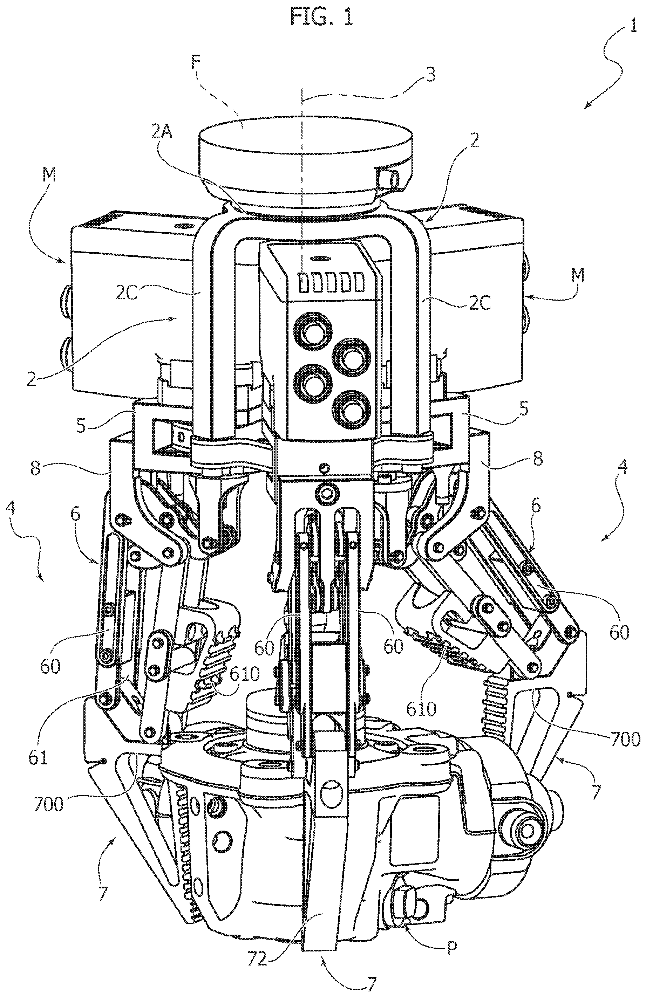

As more clearly visible in Figures 1 and 2, each of the rods 60, 61 is, in the example illustrated, constituted by two rod elements 60 and by two rod elements 61, parallel to one another. In the ensuing description and in the annexed claims, the term "parallelogram rod" is used in a general sense to comprise both the case of a single rod and the case of a number of rod elements coupled together and functionally constituting a single rod.

Once again with reference to the example illustrated (see, in particular, Figure 4A), the inner rods 61 are articulated to the bracket 8, which is rigidly connected to the arm support 5. Each linkage 6 further comprises a rocker lever 62, which is centrally mounted about an axis 63 on a connecting rod 64, which is in turn mounted in an articulated way to a central appendage 65 of the respective bracket 8. One end of the rocker lever 62 is articulated in 66 to a support 67 operatively connected to the screw 9. The opposite end of the rocker lever 62 is articulated to the outer parallelogram rod 60.

Thanks to the configuration described above, the pantograph linkage 6 makes it possible to keep the distal portion 7 of the gripping arm 4 always parallel to itself during the movements of articulation of the proximal portion 6.

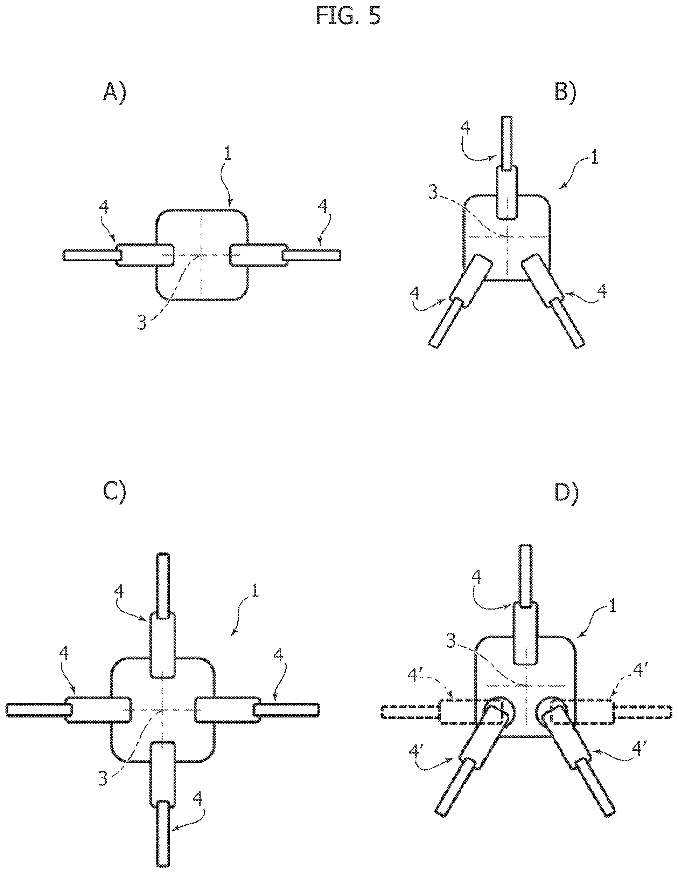

Figures 5A-5D are schematic plan views of various possible configurations of the gripper according to the invention, with two gripping arms 4 set diametrally opposite to one another (Figure 5A) or with three gripping arms 4 or four gripping arms 4 (Figures 5B, 5C) each arranged at pre-set angles about the main axis 3, or else with an arm 4 in a fixed position and two arms 4' available as desired in different angular positions about the main axis 3, within an angular range that may be limited, or else without any limitations.

The drawings illustrate different configurations of the distal portions 7 of the gripping arms 4. In any case, the distal portion 7 of each gripping arm 4 is always in the form of a gripping finger, having a body preferably constituted by a single piece of elastomeric material, with a general wedge-shaped configuration, and a base portion 7A connected to the respective pantograph linkage 6. More precisely, the base portion 7A of each gripping finger is connected in an articulated way to the ends of the two parallelogram rods 60, 61.

The body of the gripping finger 7 defines an inner surface 71 for gripping the piece, and an outer surface 70, which converge with one another in the direction of an end tip 73 of the gripping finger. The body of the gripping finger 7 further comprises two plane and parallel lateral surfaces.

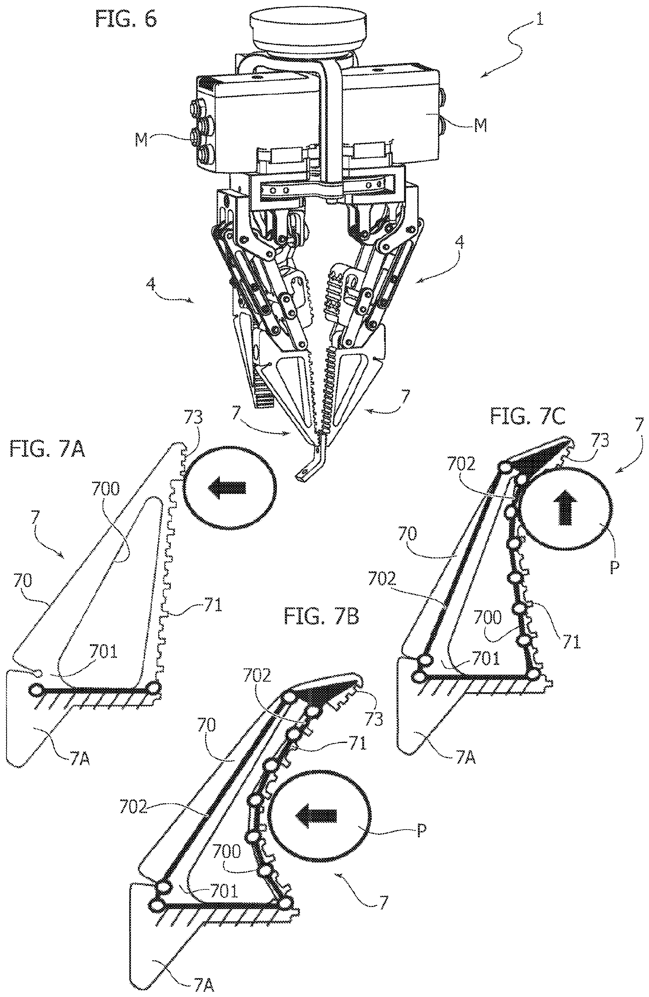

In the examples illustrated in Figures 1 and 7A-7C, the body of each gripping finger 7 has a central opening 700 so that the end tip 73 of the body is connected to the base portion 7A by two separate walls, which form an integral part of the body of the gripping finger 7 and define, respectively, the inner, gripping, surface 71 and the outer surface 70.

Preferably, the wall defining the inner, gripping, surface 71, in the example with central opening 700, is made like a cogged-belt portion, and the gripping surface 71 is a toothed surface, with teeth oriented in a direction transverse to the longitudinal direction of the surface 71 itself.

**In** the preferred embodiment of Figures 7A, 7B, and 7C, the body of elastomeric material has a wall of reduced thickness 701 that defines a hinge between the outer wall defining the outer surface 70 and the base portion 7A. Moreover, once again in the case of the example illustrated, both of the walls that define the outer and inner surfaces 70, 71 have a smaller thickness adjacent to the end tip 73 so that they define connection hinges between the tip 73 and said walls (see Figures 7B and 7C).

Thanks to the arrangement described above, the gripping finger 7 according to the invention may be obtained in such a way as to enable engagement against the inner, gripping, surface 71 by a piece P to be gripped (Figures 7B and 7C) to bring about an arching of the wall defining the surface 71 or a rotation of the end tip 73 with respect to the wall defining the gripping surface 71, which leads, as the pressure exerted by the gripping finger 7 against the piece P increases (as a result of a movement of closing of the respective gripping arm 4 on the piece P), the gripping finger itself to assume a configuration tending to surround the engaged portion of the piece P.

Furthermore, the aforesaid configuration of the gripping finger 7 is such that a force applied on the tip of the finger 7 and directed outwards (towards the left in Figure 7A) produces a rotation of the entire wall defining the outer surface 70 about the hinge 701, but does not produce any bending of the tip alone outwards.

At the same time, a pressure acting from outside on the tip of the finger 7 (towards the right in Figure 7A) when the finger 7 is not engaged on an object results in a compliant bending of the finger itself. This behaviour reduces risks in the event of collision with other objects, not producing significant forces thanks to the absorption of the impact energy, and facilitates entry of the gripper into containers during operations of picking-up of components (pick-and-place operations) since it minimizes the risk of sticking, in the limit allowing sliding of the finger on the inner surface of a container.

**In** a further example, both the outer wall defining the outer surface 70 and the inner wall defining the inner, gripping, surface 71 may be obtained by englobing therein one or more metal inserts, like cogged belts with metal inserts.

According to a further example (see Figure 4), the gripping finger 7 may have a full body consisting of elastomeric material.

According to yet a further example (Figures 2 and 3), the gripping finger 7 may have the central opening 700 described above, but with parallel partitions 702 set at a distance apart, which extend within the opening and join the two walls of the gripping finger that define the inner, gripping, surface 71 and the outer surface 70.

Figure 6 shows an example of application of the device according to the invention for gripping a component of small size. As may be seen, the configuration of the gripping arms 4 is such that they make it possible to bring the inner, gripping, surfaces 71 of the two gripping fingers 7 into positions substantially parallel and adjacent to one another.

With reference to Figure 1, preferably also associated to the inner parallelogram rod 61 is a pad 710 with a toothed engagement surface in the case where the configuration of the component to be gripped involves engagement against the component also of the proximal portion 6 of the gripping arm 4. In the solution of Figures 2 and 3, the pad 710 defines a portion of the inner parallelogram rod of each gripping arm 4.

The configuration illustrated above of the device according to the invention is able to afford a series of advantages. Each gripping arm constitutes a single modular unit that can be assembled on the main supporting structure of the device. The main supporting structure may be configured for receiving a different number of gripping arms according to the specific application. The configuration of the pantograph linkage 6 constituting the proximal portion of each gripping arm enables displacement of the respective gripping finger 7 keeping it parallel to itself, which enables gripping of a wide range of different components, having even very different sizes and/or conformations.

Of course, without prejudice to the principle of the invention, the details of construction and the embodiments may vary widely with respect to what has been described and illustrated herein purely by way of example, without thereby departing from the scope of the present invention as this is defined in the annexed claims.

## Claims

1. A gripping device (1), that can be used, for example, on a robot for handling pieces or components (P) that have variable shapes and sizes, said device (1) comprising:
- a main supporting structure (2), configured for removable connection to a robot flange (F) and defining a main axis (3) of the device;
- a plurality of gripping arms (4), which are carried by the main supporting structure (2) about said main axis (3), and each of which includes a first, proximal, arm portion (6) carried in an articulated way by the main supporting structure (2) and a second, distal, arm portion (7) connected to the first, proximal, arm portion (6); and
- a plurality of actuator devices (M), each associated to a respective gripping arm (4), for controlling a movement of articulation of said first, proximal, arm portion (4) with respect to the main supporting structure (2),
wherein:
- the gripping arms have respective arm supports (5) connected in a removable way to said main supporting structure (2);
- the proximal portion (6) of each gripping arm (4) is articulated to the respective arm support (5); and
- the actuator device of each gripping arm (4) is an electric motor (M) carried by the respective arm support (5),
so that each gripping arm (4), with its arm support (5) and its electric motor (M) constitutes a modular unit, which can be assembled as a whole on the main supporting structure (2) of the gripping device (1),
and wherein:
- said proximal arm portion (6) is a pantograph linkage configured in such a way that, during a movement of articulation of said proximal arm portion (6), the distal arm portion (7) remains parallel to itself;
- the electric motor (M) is associated to each gripping arm (4) and set on the respective arm support (5);
- the pantograph linkage (6) of each gripping arm (4) is controlled by the respective electric driving motor (M); and
- the distal portion (7) of each gripping arm (4) comprises a body made of a single piece,
said gripping device being **characterized in that**:
- the electric motor (M) associated to each gripping arm (4) is set on the respective arm support (5) with the axis of the motor parallel to said main axis (3); and
- the pantograph linkage (6) of each gripping arm (4) is controlled by the respective electric motor (M) for driving, by means of a nut-screw governed in rotation by the motor (M) and a screw (9) engaged within the nut-screw and connected to a component of the pantograph linkage (6), and
- the distal portion (7) of each gripping arm (4) comprises a body made of a single piece of elastomeric material.

2. The gripping device according to claim 1, **characterized in that** the pantograph linkage (6) of each gripping arm (4) comprises:
- a supporting bracket (8), rigidly connected to the respective arm support (5);
- an inner parallelogram rod (61) connected in an articulated way to the supporting bracket (8) and to the distal portion (7);
- a rocker lever (62), centrally articulated on a connecting rod (64), which is in turn articulated to the supporting bracket (8); and
- an outer parallelogram rod (60) articulated to one end of the rocker lever (62), to the supporting bracket (8), and to the distal portion (7), the opposite end of the rocker lever (62) being operatively connected to the screw (9) and to the respective electric driving motor (M).

3. The gripping device according to claim 1 or claim 2, **characterized in that** the body of the distal portion (7) of each gripping arm (4) is in the form of a gripping finger, having a wedge-shaped configuration, with a base portion (7A) connected to the pantograph linkage (6), an inner surface (71) for engaging a piece (P) to be gripped and an outer surface (70), said inner surface (71) and said outer surface (70) converging with one another in the direction of an end tip (73) of the gripping finger (7), and two lateral surfaces.

4. The gripping device according to claim 3, **characterized in that** the body of the gripping finger (7) is a full piece of elastomeric material.

5. The gripping device according to claim 3, **characterized in that** the body of the gripping finger (7) has a central opening (700) so that the end tip (73) of the body is connected to the base portion (7A) of the body by two walls separate from one another, which form an integral part of the body of the gripping finger (7) and define, respectively, the inner, gripping, surface (71) and the outer surface (70) of the gripping finger (7).

6. The gripping device according to claim 5, **characterized in that** said inner, gripping, surface (71) is a toothed surface, with teeth set in a direction transverse to the longitudinal direction of said surface.

7. The gripping device according to claim 5, **characterized in that** the wall defining the inner, gripping, surface (71) is in the form of a cogged-belt portion.

8. The gripping device according to claim 5, **characterized in that** the body of the gripping finger (7) has a portion of reduced thickness (701) functioning as a hinge between the wall defining the outer surface (70) and the base portion (7A).

9. The gripping device according to claim 8, **characterized in that** the two walls that define the inner, gripping, surface (71) and the outer surface (70) of the gripping finger (7) have a reduced thickness adjacent to the end tip (73) of the gripping finger (7), so that said end tip (73) is hinged to said walls in such a way that:
- a force applied on the tip of the finger (7) and directed outwards produces a rotation of the entire wall defining the outer surface (70) about the aforesaid portion of reduced thickness (701) functioning as hinge, but does not produce any bending of the tip alone outwards, and
- a pressure acting from outside on the tip of the finger (7) when the finger (7) is not engaged on an object results in a compliant bending of the finger so as to absorb energy of collision with other objects and facilitate entry of the gripper into containers during operations of picking-up of components.

10. The gripping device according to claim 5, **characterized in that** the two walls that define the inner, gripping, surface (71) and the outer surface (70) of the gripping finger (7) are connected together by a plurality of partitions (702) parallel to and set at a distance from one another and extending through said central opening (700).

## Patentansprüche

1. Eine Greifvorrichtung (1), die beispielsweise an einem Roboter zum Handhaben von Teilen oder Komponenten (P) mit variablen Formen und Größen verwendet werden kann, wobei die genannte Vorrichtung (1) umfasst:
- eine Haupttragstruktur (2), die für eine lösbare Verbindung mit einer Roboterflansch (F) konfiguriert ist und eine Hauptachse (3) der Vorrichtung definiert;
- eine Vielzahl von Greifarmen (4), die von der Haupttragstruktur (2) um die genannte Hauptachse (3) getragen werden und von denen jeder einen ersten, proximalen, Armabschnitt (6), der auf gelenkige Weise von der Haupttragstruktur (2) getragen wird, und einen zweiten, distalen, Armabschnitt (7), der mit dem ersten, proximalen, Armabschnitt (6) verbunden ist, einschließt; und
- eine Vielzahl von Stellgliedvorrichtungen (M), die jeweils einem entsprechenden Greifarm (4) zugeordnet sind, zur Steuerung einer Gelenkbewegung des genannten ersten, proximalen, Armabschnitts (4) in Bezug auf die Haupttragstruktur (2),
wobei:
- die Greifarme entsprechende Armträger (5) aufweisen, die auf lösbare Weise mit der genannten Haupttragstruktur (2) verbunden sind;
- der proximale Abschnitt (6) jedes Greifarms (4) mit dem entsprechenden Armträger (5) gelenkig verbunden ist; und
- die Stellgliedvorrichtung jedes Greifarms (4) ein Elektromotor (M) ist, der von dem entsprechenden Armträger (5) getragen wird,
so dass jeder Greifarm (4) mit seinem Armträger (5) und seinem Elektromotor (M) eine modulare Einheit bildet, die als Ganzes auf der Haupttragstruktur (2) der Greifvorrichtung (1) montiert werden kann,
und wobei:
- der genannte proximale Armabschnitt (6) ein Pantografengelenk ist, das so konfiguriert ist, dass während einer Gelenkbewegung des genannten proximalen Armabschnitts (6) der distale Armabschnitt (7) parallel zu sich selbst bleibt;
- der Elektromotor (M) jedem Greifarm (4) zugeordnet und auf dem entsprechenden Armträger (5) angeordnet ist;
- das Pantografengelenk (6) jedes Greifarms (4) von dem entsprechenden elektrischen Antriebsmotor (M) gesteuert wird; und
- der distale Abschnitt (7) jedes Greifarms (4) einen Körper aus einem einzigen Stück umfasst,
wobei die genannte Greifvorrichtung **dadurch gekennzeichnet ist, dass**:
- der jedem Greifarm (4) zugeordnete Elektromotor (M) auf dem entsprechenden Armträger (5) mit der Motorachse parallel zu der genannten Hauptachse (3) angeordnet ist; und
- das Pantografengelenk (6) jedes Greifarms (4) von dem entsprechenden Elektromotor (M) über eine von dem Motor (M) in Rotation angetriebene Mutter-Schraube und eine in der Mutter-Schraube eingreifende und mit einer Komponente des Pantografengelenks (6) verbundene Schraube (9) angetrieben wird, und
- der distale Abschnitt (7) jedes Greifarms (4) einen Körper aus einem einzigen Stück elastomerem Material umfasst.

2. Greifvorrichtung nach Anspruch 1, **dadurch gekennzeichnet, dass** das Pantografengelenk (6) jedes Greifarms (4) umfasst:
- einen Tragwinkel (8), der starr mit dem entsprechenden Armträger (5) verbunden ist;
- eine innere Parallelogrammstange (61), die auf gelenkige Weise mit dem Tragwinkel (8) und dem distalen Abschnitt (7) verbunden ist;
- einen Schwinghebel (62), der mittig auf einer Pleuelstange (64) gelenkig gelagert ist, die ihrerseits mit dem Tragwinkel (8) gelenkig verbunden ist; und
- eine äußere Parallelogrammstange (60), die mit einem Ende des Schwinghebels (62), dem Tragwinkel (8) und dem distalen Abschnitt (7) gelenkig verbunden ist, wobei das gegenüberliegende Ende des Schwinghebels (62) funktional mit der Schraube (9) und dem entsprechenden elektrischen Antriebsmotor (M) verbunden ist.

3. Greifvorrichtung nach Anspruch 1 oder Anspruch 2, **dadurch gekennzeichnet, dass** der Körper des distalen Abschnitts (7) jedes Greifarms (4) in Form eines Greiffingers mit keilförmiger Konfiguration ausgebildet ist, mit einem Basisabschnitt (7A), der mit dem Pantografengelenk (6) verbunden ist, einer Innenfläche (71) zum Erfassen eines zu greifenden Teils (P) und einer Außenfläche (70), wobei sich die genannte Innenfläche (71) und die genannte Außenfläche (70) in Richtung einer Endspitze (73) des Greiffingers (7) zueinander hin verjüngen, und zwei Seitenflächen.

4. Greifvorrichtung nach Anspruch 3, **dadurch gekennzeichnet, dass** der Körper des Greiffingers (7) ein massives Stück aus elastomerem Material ist.

5. Greifvorrichtung nach Anspruch 3, **dadurch gekennzeichnet, dass** der Körper des Greiffingers (7) eine zentrale Öffnung (700) aufweist, so dass die Endspitze (73) des Körpers mit dem Basisabschnitt (7A) des Körpers durch zwei voneinander getrennte Wände verbunden ist, die einen integralen Teil des Körpers des Greiffingers (7) bilden und jeweils die innere, greifende, Fläche (71) und die Außenfläche (70) des Greiffingers (7) definieren.

6. Greifvorrichtung nach Anspruch 5, **dadurch gekennzeichnet, dass** die genannte innere, greifende, Fläche (71) eine gezahnte Fläche ist, mit Zähnen, die in einer Richtung quer zur Längsrichtung der genannten Fläche angeordnet sind.

7. Greifvorrichtung nach Anspruch 5, **dadurch gekennzeichnet, dass** die die innere, greifende, Fläche (71) definierende Wand in Form eines Zahnriemenabschnitts ausgebildet ist.

8. Greifvorrichtung nach Anspruch 5, **dadurch gekennzeichnet, dass** der Körper des Greiffingers (7) einen Abschnitt mit reduzierter Dicke (701) aufweist, der als Scharnier zwischen der die Außenfläche (70) definierenden Wand und dem Basisabschnitt (7A) fungiert.

9. Greifvorrichtung nach Anspruch 8, **dadurch gekennzeichnet, dass** die beiden Wände, die die innere, greifende, Fläche (71) und die Außenfläche (70) des Greiffingers (7) definieren, eine reduzierte Dicke benachbart zur Endspitze (73) des Greiffingers (7) aufweisen, so dass die genannte Endspitze (73) auf solche Weise mit den genannten Wänden gelenkig verbunden ist, dass:
- eine auf die Fingerspitze (7) ausgeübte und nach außen gerichtete Kraft eine Rotation der gesamten, die Außenfläche (70) definierenden Wand um den vorgenannten Abschnitt mit reduzierter Dicke (701), der als Scharnier fungiert, bewirkt, aber keine Biegung der Spitze allein nach außen erzeugt, und
- ein von außen auf die Fingerspitze (7) wirkender Druck, wenn der Finger (7) nicht an einem Objekt angelegt ist, zu einer nachgiebigen Biegung des Fingers führt, um so Kollisionsenergie mit anderen Objekten zu absorbieren und das Eindringen des Greifers in Behälter während Entnahmevorgängen von Komponenten zu erleichtern.

10. Greifvorrichtung nach Anspruch 5, **dadurch gekennzeichnet, dass** die beiden Wände, die die innere, greifende, Fläche (71) und die Außenfläche (70) des Greiffingers (7) definieren, durch eine Vielzahl von Trennwänden (702) miteinander verbunden sind, die parallel zueinander und in einem Abstand voneinander angeordnet sind und sich durch die genannte zentrale Öffnung (700) erstrecken.

## Revendications

1. Dispositif de préhension (1), pouvant être utilisé, par exemple, sur un robot pour la manutention de pièces ou de composants (P) ayant des formes et des dimensions variables, ledit dispositif (1) comprenant :
- une structure de support principale (2), configurée pour une connexion amovible à une bride de robot (F) et définissant un axe principal (3) du dispositif ;
- une pluralité de bras de préhension (4), qui sont portés par la structure de support principale (2) autour dudit axe principal (3), et dont chacun inclut une première partie de bras proximale (6) portée de manière articulée par la structure de support principale (2) et une seconde partie de bras distale (7) connectée à la première partie de bras proximale (6) ; et
- une pluralité de dispositifs actionneurs (M), chacun associé à un bras de préhension respectif (4), pour commander un mouvement d'articulation de ladite première partie de bras proximale (4) par rapport à la structure de support principale (2),
dans lequel :
- les bras de préhension ont des supports de bras respectifs (5) connectés de manière amovible à ladite structure de support principale (2)
- la partie proximale (6) de chaque bras de préhension (4) est articulée au support de bras respectif (5) ; et
- le dispositif actionneur de chaque bras de préhension (4) est un moteur électrique (M) porté par le support de bras respectif (5),
de sorte que chaque bras de préhension (4), avec son support de bras (5) et son moteur électrique (M) constitue une unité modulaire, qui peut être assemblée dans son ensemble sur la structure de support principale (2) du dispositif de préhension (1),
et dans lequel :
- ladite partie de bras proximale (6) est une liaison de pantographe configurée de telle manière que, pendant un mouvement d'articulation de ladite partie de bras proximale (6), la partie de bras distale (7) reste parallèle à elle-même ;
- le moteur électrique (M) est associé à chaque bras de préhension (4) et monté sur le support de bras respectif (5) ;
- la liaison de pantographe (6) de chaque bras de préhension (4) est commandée par le moteur d'entraînement électrique respectif (M) ; et
- la partie distale (7) de chaque bras de préhension (4) comprend un corps réalisé d'une seule pièce,
ledit dispositif de préhension étant **caractérisé en ce que** :
- le moteur électrique (M) associé à chaque bras de préhension (4) est monté sur le support de bras respectif (5) avec l'axe du moteur parallèle audit axe principal (3) ; et
- la liaison de pantographe (6) de chaque bras de préhension (4) est commandée par le moteur électrique respectif (M) pour l'entraînement, au moyen d'un écrou-vis commandé en rotation par le moteur (M) et d'une vis (9) engagée dans l'écrou-vis et connectée à un composant de la liaison de pantographe (6), et
- la partie distale (7) de chaque bras de préhension (4) comprend un corps réalisé d'une seule pièce de matériau élastomère.

2. Dispositif de préhension selon la revendication 1, **caractérisé en ce que** la liaison de pantographe (6) de chaque bras de préhension (4) comprend :
- un support de montage (8), rigidement connecté au support de bras respectif (5) ;
- une tige de parallélogramme intérieure (61) connectée de manière articulée au support de montage (8) et à la partie distale (7) ;
- un levier oscillant (62), articulé centralement sur une bielle (64), qui est à son tour articulée au support de montage (8) ; et
- une tige de parallélogramme extérieure (60) articulée à une extrémité du levier oscillant (62), au support de montage (8), et à la partie distale (7), l'extrémité opposée du levier oscillant (62) étant connectée fonctionnellement à la vis (9) et au moteur d'entraînement électrique respectif (M).

3. Dispositif de préhension selon la revendication 1 ou la revendication 2, **caractérisé en ce que** le corps de la partie distale (7) de chaque bras de préhension (4) est sous la forme d'un doigt de préhension, ayant une configuration en forme de coin, avec une partie de base (7A) connectée à la liaison de pantographe (6), une surface intérieure (71) pour engager une pièce (P) à saisir et une surface extérieure (70), ladite surface intérieure (71) et ladite surface extérieure (70) convergeant l'une vers l'autre dans la direction d'une pointe d'extrémité (73) du doigt de préhension (7), et deux surfaces latérales.

4. Dispositif de préhension selon la revendication 3, **caractérisé en ce que** le corps du doigt de préhension (7) est une pièce pleine en matériau élastomère.

5. Dispositif de préhension selon la revendication 3, **caractérisé en ce que** le corps du doigt de préhension (7) a une ouverture centrale (700) de sorte que la pointe d'extrémité (73) du corps est connectée à la partie de base (7A) du corps par deux parois séparées l'une de l'autre, qui forment une partie intégrante du corps du doigt de préhension (7) et définissent, respectivement, la surface intérieure de préhension (71) et la surface extérieure (70) du doigt de préhension (7).

6. Dispositif de préhension selon la revendication 5, **caractérisé en ce que** ladite surface intérieure de préhension (71) est une surface dentée, avec des dents disposées dans une direction transversale à la direction longitudinale de ladite surface.

7. Dispositif de préhension selon la revendication 5, **caractérisé en ce que** la paroi définissant la surface intérieure de préhension (71) est sous la forme d'une portion de courroie crantée.

8. Dispositif de préhension selon la revendication 5, **caractérisé en ce que** le corps du doigt de préhension (7) a une partie d'épaisseur réduite (701) fonctionnant comme une charnière entre la paroi définissant la surface extérieure (70) et la partie de base (7A).

9. Dispositif de préhension selon la revendication 8, **caractérisé en ce que** les deux parois qui définissent la surface intérieure de préhension (71) et la surface extérieure (70) du doigt de préhension (7) ont une épaisseur réduite adjacente à la pointe d'extrémité (73) du doigt de préhension (7), de sorte que ladite pointe d'extrémité (73) est articulée auxdites parois de telle manière que :
- une force appliquée sur la pointe du doigt (7) et dirigée vers l'extérieur produit une rotation de toute la paroi définissant la surface extérieure (70) autour de ladite partie d'épaisseur réduite (701) fonctionnant comme charnière, mais ne produit aucun fléchissement de la pointe seule vers l'extérieur, et
- une pression agissant de l'extérieur sur la pointe du doigt (7) lorsque le doigt (7) n'est pas engagé sur un objet résulte en un fléchissement souple du doigt de manière à absorber l'énergie de collision avec d'autres objets et faciliter l'entrée de la pince dans des conteneurs pendant des opérations de ramassage de composants.

10. Dispositif de préhension selon la revendication 5, **caractérisé en ce que** les deux parois qui définissent la surface intérieure de préhension (71) et la surface extérieure (70) du doigt de préhension (7) sont connectées ensemble par une pluralité de cloisons (702) parallèles et espacées les unes des autres et s'étendant à travers ladite ouverture centrale (700).
